# EUROPEAN PATENT APPLICATION

(11) **EP 4 589 888 A1**
(43) Date of publication of application: **23.07.2025**
(21) Application number: 25151694.4
(22) Date of filing: 14.01.2025
(51) Int. Cl.: H04L 12/413

(54) **ELECTRONIC AND ELECTRICAL SYSTEM AND VEHICLE**

(30) Priority: 16.01.2024 CN 202410067961
(71) Applicant: BYD Company Limited, Shenzhen, Guangdong 518118 (CN)
(72) Inventor: ZHONG, Yilin, Shenzhen, 518118 (CN); WANG, Wei, Shenzhen, 518118 (CN); MO, Heng, Shenzhen, 518118 (CN); BAI, Yibo, Shenzhen, 518118 (CN); HUANG, Xianhui, Shenzhen, 518118 (CN)
(74) Representative: Mathys & Squire

(57) **Abstract**

The present disclosure provides an electronic and electrical system and a vehicle. The electronic and electrical system includes a first device and a second device. The electronic and electrical system further includes a first communication link and a second communication link in communication connection with the first device and the second device. The first device communicates with the second device through the first communication link and/or the second communication link. At least two communication links are set between the first device and the second device, or a redundant communication link is set between the first device and the second device. Through such a solution, the reliability of the electronic and electrical system can be improved.

## Description

### FIELD

The present disclosure relates to the field of vehicles, and specifically, to an electronic and electrical system and a vehicle.

### BACKGROUND

In a related art, with continuous development of vehicles towards electrification, networking, and intelligence, more and more functions are carried on the vehicles. Electronic and electrical architectures of vehicles are becoming increasingly complex. More and more increasingly high-end electronic and electrical components are being introduced into the vehicles, and communication requirements between the electronic and electrical components are also increasing. The realization of various functions of the vehicles also relies on electronic and electrical systems of the vehicles. If the electronic and electrical architectures of the vehicles fail, the use of the vehicles may be affected.

### SUMMARY

According to a first aspect, an embodiment of the present disclosure provides an electronic and electrical system, including a first device and a second device. The electronic and electrical system further includes a first communication link and a second communication link in communication connection with the first device and the second device. The first device communicates with the second device through the first communication link and/or the second communication link.

In some embodiments, communication types of the first communication link and the second communication link are the same; or communication types of the first communication link and the second communication link are different.

In some embodiments, the communication type of the first communication link is one of Ethernet communication, CAN communication, optical fiber communication, WiFi communication, and Bluetooth communication; and/or
the communication type of the second communication link is one of Ethernet communication, CAN communication, optical fiber communication, WiFi communication, and Bluetooth communication.

In some embodiments, communication types of the first communication link and the second communication link are the same. The electronic and electrical system further includes a third communication link in communication connection with the first device and the second device. A communication type of the third communication link is different from the communication type of the first communication link. The third communication link is configured for the communication between the first device and the second device.

In some embodiments, the electronic and electrical system further includes a fourth communication link in communication connection with the first device and the second device. A communication type of the fourth communication link is the same as the communication type of the third communication link. The fourth communication link is configured to realize the communication between the first device and the second device.

In some embodiments, the communication type of the third communication link is one of Ethernet communication, CAN communication, optical fiber communication, WiFi communication, and Bluetooth communication.

In some embodiments, the first device communicates with the second device through the second communication link when the first communication link is in a failure state.

In some embodiments, when the first communication link is unable to meet a service requirement separately, the first device communicates with the second device through the first communication link and the second communication link.

In some embodiments, the first device is at least one of a controller, a sensor, and an actuator, and/or, the second device is at least one of a controller, a sensor, and an actuator.

In some embodiments, the first device is a domain controller, and/or the second device is a domain controller.

In some embodiments, the first device is configured to realize a first function, and the second device is configured to realize the first function when the first device is in a first state.

In some embodiments, the first state includes a failure state, or a state that the first device is unable to meet a service requirement separately.

In some embodiments, the first function includes at least one of a power control function, a steering function, a braking function, a vehicle body control function, and a chassis control function.

In some embodiments, the first device is a first domain controller of the vehicle, and the second device is a cross-domain computing controller of the vehicle.

In some embodiments, the electronic and electrical system further includes a third device. The third device is connected to the first communication link, and is located between the first device and the second device.

In some embodiments, the electronic and electrical system further includes a fourth device. The fourth device is connected to the second communication link, and is located between the first device and the second device.

In some embodiments, the third device is at least one of a controller, a sensor, and an actuator, and/or, the fourth device is at least one of a controller, a sensor, and an actuator.

In some embodiments, the third device is a front area controller of the vehicle, and the fourth device is a rear area controller of the vehicle.

According to a second aspect, the embodiments of the present disclosure provide a vehicle, including the foregoing electronic and electrical system.

### BRIEF DESCRIPTION OF THE DRAWINGS

FIG. 1 is a schematic diagram of network architecture of a communication system according to an embodiment of the present disclosure;
FIG. 2 is a schematic diagram of network architecture of a communication system according to an embodiment of the present disclosure;
FIG. 3 is a schematic diagram of network architecture of a communication system according to an embodiment of the present disclosure;
FIG. 4 is a schematic diagram of network architecture of a communication system according to an embodiment of the present disclosure;
FIG. 5 is a schematic diagram of network architecture of a communication system according to an embodiment of the present disclosure;
FIG. 6 is a schematic diagram of network architecture of a communication system according to an embodiment of the present disclosure;
FIG. 7 is a schematic diagram of network architecture of a communication system according to an embodiment of the present disclosure;
FIG. 8 is a schematic diagram of network architecture of a communication system according to an embodiment of the present disclosure;
FIG. 9 is a schematic diagram of network architecture of a communication system according to an embodiment of the present disclosure;
FIG. 10 is a schematic diagram of network architecture of a communication system according to an embodiment of the present disclosure;
FIG. 11 is a schematic diagram of network architecture of a communication system according to an embodiment of the present disclosure;
FIG. 12 is a schematic diagram of network architecture of a communication system according to an embodiment of the present disclosure;
FIG. 13 is a schematic diagram of network architecture of a communication system according to an embodiment of the present disclosure;
FIG. 14 is a schematic diagram of network architecture of a communication system according to an embodiment of the present disclosure;
FIG. 15 is a schematic diagram of network architecture of a communication system according to an embodiment of the present disclosure;
FIG. 16 is a schematic diagram of network architecture of a communication system according to an embodiment of the present disclosure;
FIG. 17 is a schematic diagram of network architecture of a communication system of a vehicle according to an embodiment of the present disclosure; and
FIG. 18 is a schematic diagram of a vehicle according to an embodiment of the present disclosure.

In the drawings: electronic and electrical system 10, first device 11, second device 12, third device 13, fourth device 14, fifth device 15, sixth device 16, first communication link 21, second communication link 22, third communication link 23, fourth communication link 24, power controller 101, steering & braking controller 102, vehicle body controller 103, and a chassis controller 104.

### DETAILED DESCRIPTION

Technical solutions in the present disclosure are described below with reference to accompanying drawings.

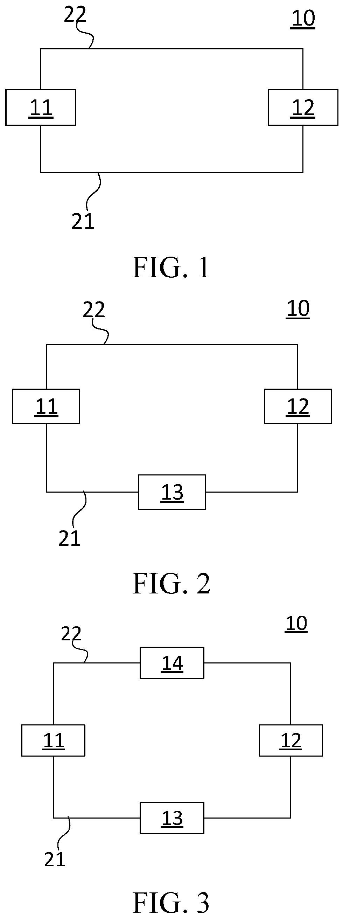

FIG. 1 is a schematic diagram of architecture of electronic and electrical system 10 according to an embodiment of the present disclosure. The electronic and electrical system 10 includes a first device 11, a second device 12, a first communication link 21, and a second communication link 22. The first communication link 21 is in communication connection with the first device 11 and the second device 12. The second communication link 22 is in communication connection with the first device 11 and the second device 12. The first device 11 may communicate with the second device 12 through the first communication link 21; or the first device 11 may communicate with the second device 12 through the second communication link 22; or the first device 11 may communicate with the second device 12 through the first communication link 21 and the second communication link 22.

The first device 11 may communicate with the second device 12 by using different communication links in a case that the electronic and electrical system 10 is in different operating states. For example, when the first communication link 21 between the first device 11 and the second device 12 fails, the first device 11 and the second device 12 may realize the communication between the first device 11 and the second device 12 through the second communication link 22. For another example, when the first communication link 21 is unable to support a communication requirement, the first device 11 may communicate with the second device 12 through the second communication link 22; or the first device 11 may communicate with the second device 12 through the first communication link 21 and the second communication link 22, so as to better meet a transmission requirement between the first device 11 and the second device 12. Therefore, the reliability of the electronic and electrical system 10 of a vehicle can be improved.

For example, the situation that the first communication link 21 is unable to support a transmission requirement may be, but is not limited to, that a transmission resource of the first communication link 21 is insufficient to meet a transmission requirement between the first device 11 and the second device 12.

Optionally, a communication type of the first communication link 21 is one of Ethernet communication, Controller Area Network (CAN) communication, optical fiber communication, WiFi communication, and Bluetooth communication.

Optionally, a communication type of the second communication link 22 is one of Ethernet communication, CAN communication, optical fiber communication, WiFi communication, and Bluetooth communication.

Specific embodiments of the present disclosure are introduced with reference to the accompanying drawings.

As shown in FIG. 1, in some possible embodiments, communication types of the first communication link 21 and the second communication link 22 are the same.

For example, the first communication link 21 is in Ethernet communication, and the second communication link 22 is in Ethernet communication; or, the first communication link 21 is in CAN communication, and the second communication link 22 is in CAN communication. In such a solution, the first communication link 21 and the second communication link 22 are redundant paths in the same communication type. It may be understood that, in such a solution, the first communication link 21 and the second communication link 22 may form a ring loop to form path redundancy architecture of ring network architecture. Moreover, the first communication link 21 and the second communication link 22 adopt the same communication type, which can better facilitate switching between the communication links, improve the stability of the electronic and electrical system 10, and facilitate controlling.

Optionally, as shown in FIG. 1, the first device 11 and the second device 12 may be set to be independent of each other and serve as backups for each other. In a vehicle, the first device may include a cross-domain computing controller. The second device may include a right area controller. The cross-domain computing controller and the right area controller adopt an inter-domain redundancy design. Both the cross-domain computing controller and the right area controller may include a power control function, a steering & braking function, a vehicle body control function, and a chassis control function. When either of the two domain controllers encounters a problem, the power control function, the steering & braking function, the vehicle body control function, and the chassis control function can still operate normally.

As shown in FIG. 2, in some possible embodiments, the electronic and electrical system 10 further includes a third device 13. The third device 13 is connected to the first communication link 21, and is located between the first device 11 and the second device 12. The communication among various devices may be realized through the ring loop formed by the first communication link 21 and the second communication link 22. For example, when the first communication link 21 has a communication failure between the first device 11 and the third device 13, the third device 13 can communicate with the second device 12 through a link of the first communication link 21 between the second device 12 and the third device 13; or, the third device 13 can communicate with the first device 11 through the second communication link 22 via the second device 12. For another example, when the first communication link 21 has a communication failure between the second device 12 and the third device 13, the third device 13 can communicate with the first device 11 through a link of the first communication link 21 between the first device 11 and the third device 13; or, the third device 13 can communicate with the second device 12 through the second communication link 22 via the first device 11.

It may be understood that, there is a redundant communication path between two devices in the ring loop formed by the first communication link 21 and the second communication link 22. Thus, when one communication path between the two devices fails, the communication between the two devices can be realized through the other communication path.

As shown in FIG. 3, in some other possible embodiments, the electronic and electrical system further includes a fourth device 14. The fourth device 14 is connected to the second communication link 22, and is located between the first device 11 and the second device 12. The communication among various devices may be realized through the ring loop formed by the first communication link 21 and the second communication link 22. For example, when the second communication link 22 has a communication failure between the first device 11 and the fourth device 14, the fourth device 14 can communicate with the second device 12 through a link of the second communication link 22 between the second device 12 and the fourth device 14; or, the fourth device 14 can communicate with the first device 11 through the first communication link 21 via the second device 12. For another example, when the second communication link 22 has a communication failure between the second device 12 and the fourth device 14, the fourth device 14 may communicate with the first device 11 through a link of the second communication link 22 between the first device 11 and the fourth device 14; or, the fourth device 14 can communicate with the second device 12 through the first communication link 21 via the first device 11.

It may be understood that, the first communication link 21 and the second communication link 22 form a ring communication network. Other devices may alternatively be connected to the first communication link 21 and the second communication link 22. There is a redundant communication path between any two devices connected to the first communication link 21 or the second communication link. Such a ring communication network is carried on a vehicle, so that the reliability of the communication among various devices of the electronic and electrical system of the vehicle can be improved.

In a vehicle, the first device 11 may include a cross-domain computing controller, and the second device 12 may include a right area controller. In addition, the vehicle 100 further includes a front area controller, a rear area controller, an intelligent driving controller, and a cabin domain controller. Multi-end and multi-path interconnection may be formed among the cross-domain computing controller, the right area controller, the front area controller, the rear area controller, the intelligent driving controller, and the cabin domain controller through the Ethernet, a CAN bus, and a LIN bus. After one connection paths of the Ethernet, the CAN bus, and the LIN bus between any two domain controllers is disconnected, connection can still be realized through the Ethernet, CAN bus, and LIN bus that is not disconnected. Alternatively, the connection with a disconnected domain controller is realized through an indirect connection of other domain controllers, thereby realizing path redundancy and bus redundancy functions between the domain controllers.

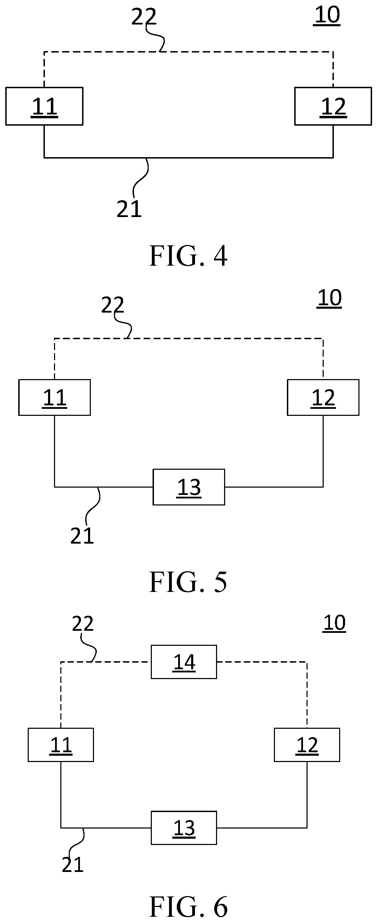

As shown in FIG. 4, in some possible embodiments, communication types of the first communication link 21 and the second communication link 22 are different.

For example, the first communication link 21 is in Ethernet communication, and the second communication link 22 is in CAN communication; or, the first communication link 21 is in WiFi communication, and the second communication link 22 is in optical fiber communication. In such a solution, the first communication link 21 and the second communication link 22 are redundant paths in different communication types, which may be configured as bus redundancy. When the first communication link 21 fails or the first communication link 21 is unable to support a transmission requirement, the communication between the first device 11 and the second device 12 may be realized by using the second communication link 22.

It may be understood that, in such a solution, the first communication link 21 and the second communication link 22 may form different types of communication redundancy, which can realize the communication between the first device 11 and the second device 12 by using the second communication link 22 when the first communication link 21 fails or is unable to support a transmission requirement.

In addition, as shown in FIG. 5, in some possible embodiments, the electronic and electrical system 10 may further include a third device 13. The third device 13 is connected to the first communication link 21, and is located between the first device 11 and the second device 12. The communication among various devices may be realized through the ring loop formed by the first communication link 21 and the second communication link 22.

As shown in FIG. 6, in some other possible embodiments, the electronic and electrical system may further include a fourth device 14. The fourth device 14 is connected to the second communication link 22, and is located between the first device 11 and the second device 12. The communication among various devices may be realized through the ring loop formed by the first communication link 21 and the second communication link 22.

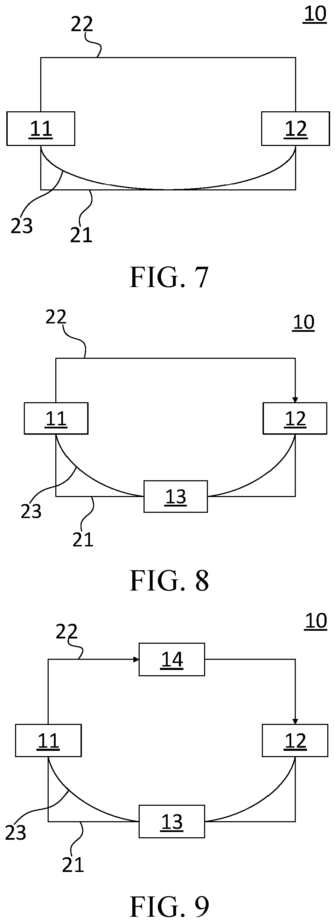

As shown in FIG. 7, in some possible embodiments, the electronic and electrical system 10 further includes a third communication link 23. The third communication link 23 is in communication connection with the first device 11 and the second device 12. The third communication link 23 is configured for the communication between the first device 11 and the second device 12. The first device 11 communicates with the second device 12 through at least one of the first communication link 21, the second communication link 22, and the third communication link 23.

For example, when the first communication link 21 between the first device 11 and the second device 12 fails, the communication between the first device 11 and the second device 12 may be realized by the first device 11 and the second device 12 through the second communication link 22 and/or the third communication link 23. For another example, when the first communication link 21 is unable to support a communication requirement, the first device 11 may communicate with the second device 12 through the second communication link 22; or the first device 11 may communicate with the second device 12 through the third communication link 23; or the first device 11 may communicate with the second device 12 through at least two of the first communication link 21, the communication link 22, and the third communication link 23, so as to better meet a transmission requirement between the first device 11 and the second device 12. Therefore, the reliability of the electronic and electrical system 10 of a vehicle can be improved.

In the present disclosure, a redundant communication link is set between the first device 11 and the second device 12. Through such a solution, communication abnormalities between the first device 11 and the second device 12 caused by a communication link failure between the first device 11 and the second device 12 or a reason that a communication link is unable to meet a communication requirement can be avoided.

As shown in FIG. 8, in some possible embodiments, the electronic and electrical system 10 further includes a third device 13. The third device 13 is connected to the first communication link 21 and the third communication link 23, and is located between the first device 11 and the second device 12. The communication among various devices may be realized through a redundancy design of the first communication link 21, the second communication link 22, and the third communication link 23. For example, when the first communication link 21 has a communication failure between the first device 11 and the third device 13, the third device 13 can communicate with the second device 12 through a link of the first communication link 21 between the second device 12 and the third device 13; or, the third device 13 can communicate with the first device 11 through the second communication link 22 via the second device 12; or, the third device 13 can communicate with the second device 12 through a link of the third communication link 23 between the second device 12 and the third device 13; or, the third device 13 can communicate with the first device 11 through a link of the third communication link 23 between the first device 11 and the third device 13.

As shown in FIG. 9, in some other possible embodiments, the electronic and electrical system 10 further includes a fourth device 14. The fourth device 14 is connected to the second communication link 22, and is located between the first device 11 and the second device 12. The communication among various devices may be realized through a redundancy design of the first communication link 21, the second communication link 22, and the third communication link 23. For example, when the second communication link 22 has a communication failure between the first device 11 and the fourth device 14, the fourth device 14 can communicate with the second device 12 through a link of the second communication link 22 between the second device 12 and the fourth device 14; or, the fourth device 14 can communicate with the first device 11 through the first communication link 21 and/or the third communication link 23 via the second device 12.

Optionally, the communication type of the third communication link 23 is one of Ethernet communication, CAN communication, optical fiber communication, WiFi communication, and Bluetooth communication. The communication types of the first communication link 21, the second communication link 22, and the third communication link 23 may be set to be different from each other, or the communication types of at least two of the first communication link 21, the second communication link 22, and the third communication link 23 may be set to be the same.

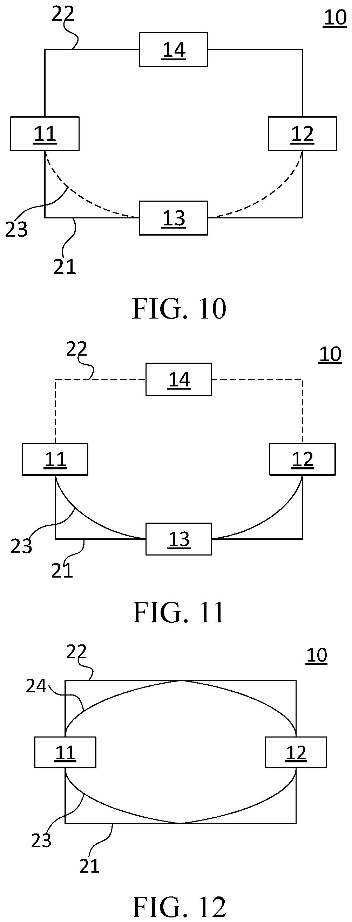

As shown in FIG. 10, in some possible embodiments, communication types of the first communication link 21 and the second communication link 22 are the same, and a communication type of the third communication link 23 is different from the communication type of the first communication link 21, so as to construct path redundancy and bus redundancy architecture. For example, the first communication link 21 is in Ethernet communication, the second communication link 22 is in Ethernet communication, and the third communication link 23 is in CAN communication; Or, the first communication link 21 is in WiFi communication, the second communication link 22 is in WiFi communication, and the third communication link 23 is in optical fiber communication. It may be understood that, in such a solution, the first communication link 21 and the second communication link 22 may form a ring loop. The third communication link 23 forms a communication link in a different communication type outside a ring network. In such a solution, the first communication link 21 and the second communication link 22 are redundant paths in the same communication type. When the first communication link 21 fails or the first communication link 21 is unable to support a transmission requirement, the communication between the first device 11 and the second device 12 may be realized by using the second communication link 22. The communication between the first device 11 and the second device 12 may be realized by using the third communication link 23 when a ring network communication link formed by the first communication link 21 and the second communication link 22 fails or is unable to support a transmission requirement.

As shown in FIG. 11, in some possible embodiments, communication types of the first communication link 21 and the second communication link 22 are different, and a communication type of the third communication link 23 is the same as the communication type of the first communication link 21. For example, the first communication link 21 is in Ethernet communication, the second communication link 22 is in CAN communication, and the third communication link 23 is in Ethernet communication; or the first communication link 21 is in WiFi communication, the second communication link 22 is in optical fiber communication, and the third communication link 23 is in WiFi communication. It may be understood that, in such a solution, the first communication link 21 and the third communication link 23 may form a ring loop. The second communication link 22 forms a communication link in a different communication type outside a ring network. Therefore, architecture of path redundancy and bus redundancy is constructed.

As shown in FIG. 12, in some possible embodiments, the electronic and electrical system 10 further includes a third communication link 23 and a fourth communication link 24. The third communication link 23 is in communication connection with the first device 11 and the second device 12. The third communication link 23 is configured for the communication between the first device 11 and the second device 12. The fourth communication link 24 is in communication connection with the first device 11 and the second device 12. The fourth communication link 24 is configured for the communication between the first device 11 and the second device 12.

The first device 11 communicates with the second device 12 through at least one of the first communication link 21, the second communication link 22, the third communication link 23, and the fourth communication link 24.

For example, when the first communication link 21 between the first device 11 and the second device 12 fails, the communication between the first device 11 and the second device 12 may be realized by the first device 11 and the second device 12 through the second communication link 22, the third communication link 23 and/or the fourth communication link 24. For another example, when the first communication link 21 is unable to support a communication requirement, the first device 11 may communicate with the second device 12 through the second communication link 22, the third communication link 23 or the fourth communication link 24; or the first device 11 may communicate with the second device 12 through at least two of the first communication link 21, the second communication link 22, the third communication link 23, and the fourth communication link 24, so as to better meet a transmission requirement between the first device 11 and the second device 12. Therefore, the reliability of the electronic and electrical system 10 of a vehicle can be improved.

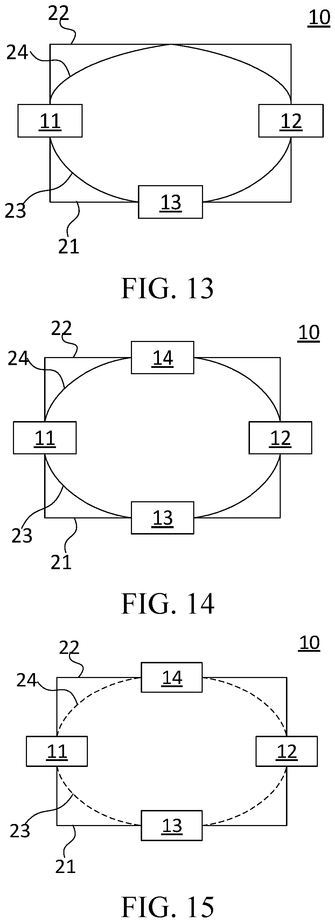

As shown in FIG. 13, in some possible embodiments, the electronic and electrical system 10 further includes a third device 13. The third device 13 is connected to the first communication link 21 and the third communication link 23, and is located between the first device 11 and the second device 12. The communication among various devices may be realized through a redundancy design of the first communication link 21, the second communication link 22, the third communication link 23, and the fourth communication link 24. For example, when the first communication link 21 has a communication failure between the first device 11 and the third device 13, the third device 13 can communicate with the second device 12 through a link of the first communication link 21 between the second device 12 and the third device 13; or, the third device 13 can communicate with the first device 11 through the second communication link 22 and/or the fourth communication link 24 via the second device 12; or, the third device 13 can communicate with the second device 12 through a link of the third communication link 23 between the second device 12 and the third device 13; or, the third device 13 can communicate with the first device 11 through a link of the third communication link 23 between the first device 11 and the third device 13.

As shown in FIG. 14, in some other possible embodiments, the electronic and electrical system 10 further includes a fourth device 14. The fourth device 14 is connected to the second communication link 22 and the fourth communication link 24, and is located between the first device 11 and the second device 12. The communication among various devices may be realized through a redundancy design of the first communication link 21, the second communication link 22, the third communication link 23, and the fourth communication link 24. For example, when the second communication link 22 has a communication failure between the first device 11 and the fourth device 14, the fourth device 14 can communicate with the second device 12 through a link of the second communication link 22 between the second device 12 and the fourth device 14; or, the fourth device 14 can communicate with the first device 11 through the first communication link 21 and/or the third communication link 23 via the second device 12; or, the fourth device 14 can communicate with the second device 12 through a link of the fourth communication link 24 between the second device 12 and the fourth device 14; or, the fourth device 14 can communicate with the first device 11 through a link of the fourth communication link 24 between the first device 11 and the fourth device 14.

Optionally, the communication type of the third communication link 23 is one of Ethernet communication, CAN communication, optical fiber communication, WiFi communication, and Bluetooth communication. Optionally, the communication type of the fourth communication link 24 is one of Ethernet communication, CAN communication, optical fiber communication, WiFi communication, and Bluetooth communication. The communication types of the first communication link 21, the second communication link 22, the third communication link 23, and the fourth communication link 24 may be set to be different from each other, or the communication types of at least two of the first communication link 21, the second communication link 22, the third communication link 23, and the fourth communication link 24 may be set to be the same. A Gigabit dual Ethernet ring network may be used between the first device and the second device, so as to realize transmission path redundancy through a unique dual ring topology design. Even if a connection is interrupted, stable signal transmission can still be maintained, continuous transmission can be achieved at breakpoints, and the link is more optimized.

As shown in FIG. 15, in some possible embodiments, communication types of the first communication link 21 and the second communication link 22 are the same, a communication type of the third communication link 23 is different from the communication type of the first communication link 21, and a communication type of the fourth communication link 24 is the same as the communication type of the third communication link 23. For example, the first communication link 21 is in Ethernet communication, the second communication link 22 is in Ethernet communication, the third communication link 23 is in CAN communication, and the fourth communication link 24 is in CAN communication. Or, the first communication link 21 is in WiFi communication, the second communication link 22 is in WiFi communication, the third communication link 23 is in optical fiber communication, and the fourth communication link 24 is in optical fiber communication. It may be understood that, in such a solution, the first communication link 21 and the second communication link 22 may form a ring loop. The third communication link 23 and the fourth communication link 24 may form a ring loop to form dual ring network architecture. Therefore, architecture of path redundancy and bus redundancy is constructed. In such a solution, the first communication link 21 and the second communication link 22 are redundant paths in the same communication type. When the first communication link 21 fails or the first communication link 21 is unable to support a transmission requirement, the communication between the first device 11 and the second device 12 may be realized by using the second communication link 22. The communication between the first device 11 and the second device 12 may be realized by using the third communication link 23 and the fourth communication link 24 when a ring network communication link formed by the first communication link 21 and the second communication link 22 fails or is unable to support a transmission requirement.

Different communication types of ring links may be set up in parallel to form a dual layer ring network. Even one bus encounters an abnormality and is unable to communicate, communication can still be performed through another parallel bus, which improves the reliability of bus communication. For example, one ring network (the ring network architecture formed by the first communication link and the second communication link) may be a Gigabit Ethernet bus; and the other ring network (the ring network architecture formed by the third communication link and the fourth communication link) may be a CANFD bus.

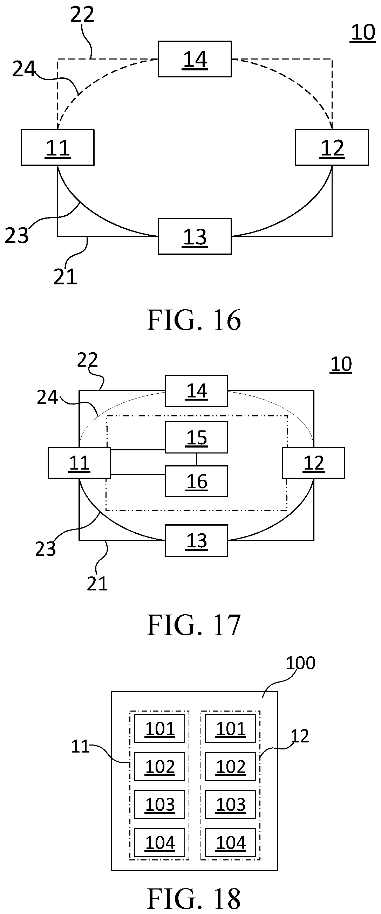

As shown in FIG. 16, in some possible embodiments, communication types of the first communication link 21 and the second communication link 22 are different, a communication type of the third communication link 23 is the same as the communication type of the first communication link 21, and a communication type of the fourth communication link 24 is the same as the communication type of the second communication link 22. For example, the first communication link 21 is in Ethernet communication, the second communication link 22 is in CAN communication, the third communication link 23 is in Ethernet communication, and the fourth communication link 24 is in CAN communication. Or, the first communication link 21 is in WiFi communication, the second communication link 22 is in optical fiber communication, the third communication link 23 is in WiFi communication, and the fourth communication link 24 is in optical fiber communication. It may be understood that, in such a solution, the first communication link 21 and the third communication link 23 may form a ring loop. The second communication link 22 and the fourth communication link 24 may form a ring loop to form dual ring network architecture. Therefore, architecture of path redundancy and bus redundancy is constructed.

In some possible embodiments, the first device 11 may include at least one of a controller, a sensor, and an actuator, and/or, the second device 12 may include at least one of a controller, a sensor, and an actuator. In combination with the foregoing path redundancy and bus redundancy architecture, stable communication between the first device 11 and the second device 12 can be maintained. Communication can still be performed through another communication link when one communication link between the first device 11 and the second device 12 fails or is unable to support a transmission requirement, so that the stability of the electronic and electrical system 10 can be maintained.

The first device 11 and the second device 12 may be different devices. For example, the first device 11 is a controller, and the second device 12 is a sensor; or, the first device 11 is a controller, and the second device 12 is an actuator, and stable communication between different devices can be realized.

In addition, the first device 11 and the second device 12 may be set as the same devices. For example, the first device 11 is a controller, and the second device 12 is a controller; or, the first device 11 is a sensor, and the second device 12 is a sensor. Further, the first device 11 and the second device 12 may be set to be independent of each other and serve as backups for each other to form device redundancy architecture. In combination with the foregoing path redundancy and/or bus redundancy architecture, dual redundancy or triple redundancy architecture is formed.

In some possible embodiments, the first device 11 is a domain controller, and/or the second device 12 is a domain controller. In combination with the foregoing path redundancy and/or bus redundancy architecture, stable communication between the first device 11 and the second device 12 can be maintained. Communication can still be performed through another communication link when one communication link between the first device 11 and the second device 12 fails or is unable to support a transmission requirement, so that the stability of the electronic and electrical system 10 can be maintained.

The first device 11 and the second device 12 may be configured to realize the same function. For example, the first device 11 may be configured to realize a first function, and the second device 12 may be configured to realize the first function. The first device 11 and the second device 12 are device redundancy. When the first device 11 fails or is unable to support a service requirement, the first function may be realized through the second device 12.

The first device 11 and the second device 12 may be set to be independent of each other and serve as backups for each other to form device redundancy architecture. In combination with the foregoing path redundancy and/or bus redundancy architecture, dual redundancy or triple redundancy architecture is formed.

The first device 11 and the second device 12 may adopt an inter-domain redundancy design. The first device 11 and the second device 12 belong to different functional domains. For example, the first device 11 and the second device 12 may be different domain controllers. At least one of the first device 11 and the second device 12 may include a power control function, a steering & braking function, a vehicle body control function, and a chassis control function. When either of the two domain controllers encounters a problem, the power control function, the steering & braking function, the vehicle body control function, and the chassis control function can still operate normally.

For another example, the first device 11 is a cross-domain computing controller, and the second device 12 is a right area controller. A braking network link 25 may be connected between the first device 11 and the second device 12. The braking network link 25 may be set to be connected to a brake, a brake pedal, and the like through signals. In addition, a power network link 26 may be connected between the first device 11 and the second device 12. The power network link 26 may be set to be connected to a throttle, a power assembly, and the like through signals.

In some possible embodiments, the first device 11 is configured to realize a first function, and the second device 12 is configured to realize the first function when the first device 11 is in a first state. When a single device is in the first state, the other can take over control, so as to ensure reliable operation of safety related functions such as parking brake and collision unlock, thereby greatly improving safety and stability. The first device 11 and the second device 12 may be set to be independent of each other and serve as backups for each other to form device redundancy architecture. In combination with the foregoing path redundancy and/or bus redundancy architecture, dual redundancy or triple redundancy architecture is formed.

The first state includes a failure state, or a state that the first device 11 is unable to meet a service requirement separately. Therefore, when a single device fails or is unable to meet a requirement, the other device take over or multiple devices operate together, which further improves the stability of the electronic and electrical system 10.

The first function may include at least one of a power control function, a steering function, a braking function, a vehicle body control function, and a chassis control function. Therefore, the control function, the steering function, the braking function, the vehicle body control function, the chassis control function, and the like of the electronic and electrical system 10 are maintained.

In some possible embodiments, the first device 11 may be a first domain controller of a vehicle, and the second device 12 may be a cross-domain computing controller of the vehicle, so as to maintain stable operation of the vehicle. The first domain controller may be an intelligent driving controller, a cabin domain controller, a right area controller, a front area controller, a rear area controller, and the like, and may realize stable communication between the cross-domain computing controller and the intelligent driving controller, between the cross-domain computing controller and the cabin domain controller, between the cross-domain computing controller and the right area controller, between the cross-domain computing controller and the front area controller, or between the cross-domain computing controller and the rear area controller through a path redundant link and/or a bus redundant harness.

In some possible embodiments, the electronic and electrical system 10 further include a third device 13. The third device 13 is connected to the first communication link 21, and is located between the first device 11 and the second device 12. The third device 13 may include at least one of a controller, a sensor, and an actuator. In addition, the third device 13 may alternatively be a front area controller of a vehicle.

In addition, in some embodiments, the electronic and electrical system 10 further includes a fourth device 14. The fourth device 14 is connected to the second communication link 22, and is located between the first device 11 and the second device 12. The fourth device 14 may include at least one of a controller, a sensor, and an actuator. For example, the fourth device 14 may be a rear area controller of a vehicle.

As shown in FIG. 17, in some possible embodiments, the first device 11 may be a cross-domain computing controller, the second device 12 may be a right area controller, the third device 13 may be a rear area controller, and the fourth device 14 may be a front area controller. The first communication link 21 is connected to the cross-domain computing controller, the rear area controller, and the right area controller. The second communication link is connected to the cross-domain computing controller, the front area controller, and the right area controller. The third communication link is connected to the cross-domain computing controller, the rear area controller, and the right area controller. The fourth communication link is connected to the cross-domain computing controller, the front area controller, and the right area controller. Communication types of the first communication link and the second communication link are the same. A communication type of the third communication link may be the same as that of the fourth communication link. The communication type of the first communication link may be different from that of the third communication link.

In addition, the electronic and electrical system 10 may further include a fifth device 15 and a sixth device 16. The first device, the fifth device 15, and the sixth device 16 may be connected to form ring network redundancy architecture through a communication link. The fifth device 15 may be an intelligent driving controller. The sixth device 16 may be a cabin domain controller. The cross-domain computing device, the intelligent driving controller, and the cabin domain controller may be connected to form ring network architecture through a communication link.

FIG. 17 is a schematic diagram of a path redundancy & bus redundancy structure of domain controller-based triple redundancy architecture. According to the present disclosure, transmission path redundancy is realized through a unique dual ring topology structure design by using a dual ring network communication link. Even a connection in a domain is interrupted, communication between domain controllers can still be realized through other paths, so that stable signal transmission can be maintained, continuous transmission can be achieved at breakpoints, and the link is more optimized.

The cross-domain computing controller may communicate with the front area controller by using an Ethernet path. When the Ethernet path encounters an abnormality and the cross-domain computing controller is unable to directly communicate with the front area controller through the Ethernet, the communication between the cross-domain computing controller and the front area controller can still be realized through an Ethernet connection between the cross-domain computing controller and the rear area controller and through post Ethernet bridging.

In addition, a Gigabit Ethernet bus, a CAN bus, a CAN with Flexible Data rate (CANFD), or a Local Interconnect Network (LIN) may be set in parallel between the cross-domain computing controller and the front area controller to from a dual layer ring network, so as to realize bus redundancy. Multi-bus interconnection is realized between the cross-domain computing controller, the right area controller, the front area controller, the rear area controller, the intelligent driving controller, and the cabin domain controller through the Ethernet, a CAN bus, a CANFD bus, and a LIN bus. When the connection of one of the Ethernet/the CAN bus/the CANFD bus/the LIN bus between any two domain controllers is disconnected, the connection can still be realized through the parallel Ethernet/CAN bus/CANFD bus/LIN bus that is not disconnected.

In addition, the first device 11 may include at least one of a power controller 101, a steering & braking controller 102, a vehicle body controller 103, and a chassis controller 104. The second device may be the same as the first device. The first device is independent of the second device. That is, the first device and the second device may equally communicate with other components, and the first device and the second device serve as backups for each other. When the first device fails, the first device can be replaced by the second device. When the second device fails, the second device can be replaced by the first device.

The present disclosure provides domain controller-based multi-redundancy architecture. Redundancy architecture with at least two communication links is between the first device and the second device, and key subsystems of a vehicle are simultaneously arranged on two domain controllers independent of each other to serve as backups for each other. In the domain controller-based multi-redundancy architecture, an in-vehicle Gigabit Ethernet bus and a CANFD bus are set in parallel to form a dual layer ring network.

In some specific examples of the present disclosure, FIG. 18 is a schematic diagram of an inter-domain redundancy structure of domain controller-based multi-redundancy architecture according to the present disclosure. An Asymmetric Multi-Processing (AMP) architecture core deployment is adopted, a system is run on each of the first device and the second device to ensure functional safety in manner of a dual core lockstep operation. Through bionic reference of an octopus heart, safety key subsystems are innovatively and simultaneously deployed on two domain controllers independent of each other and serve as backups for each other.

In FIG. 18, the cross-domain computing controller and the right area controller adopt an inter-domain redundancy design. Both the cross-domain computing controller and the right area controller include a power control function, a steering & braking function, a vehicle body control function, and a chassis control function. When either of the two domain controllers encounters a problem, the power control function, the steering & braking function, the vehicle body control function, and the chassis control function can still operate normally. When a single device fails, the other can take over control, so as to ensure reliable operation of safety related functions such as parking brake and collision unlock, thereby greatly improving safety and stability.

The communication types of various communication links in the present disclosure are not limited to the examples in the foregoing embodiments. The types and functions of various devices in the present disclosure are not limited to the examples in the foregoing embodiments.

The present disclosure further provides a vehicle 100, including the electronic and electrical system 10 described previously. According to the vehicle 100 of the present disclosure, safety key subsystems may be simultaneously deployed on two domain controllers independent of each other and serve as backups for each other. In combination with the foregoing dual ring network architecture, three-layer redundancy is formed. When a single device fails, the other can take over control. When one communication link fails, communication can be performed through a redundant communication link, so as to ensure reliable operation of safety related functions such as parking brake and collision unlock, thereby greatly improving the safety and stability of the system.

It is further to be understood that first, second, third, third, and various numbers involved herein are for the convenience of description for distinction and are not intended to limit the scope of the present disclosure.

It is to be understood that terms "and/or" herein is only an association relationship for describing associated objects and represents that three relationships may exist. For example, A and/or B may represent: only A exists, both A and B exist, and only B exists. In addition, the character "/" herein generally indicates an "or" relationship between the associated objects.

It is to be understood that, in various embodiments of the present disclosure, sequence numbers of various foregoing processes do not mean execution sequences. The execution sequences of various processes are to be determined according to functions and internal logic of the processes, and are not to be construed as any limitation on implementation processes of the embodiments of the present disclosure.

Those of ordinary skill in the art may notice that the exemplary units and algorithm steps described with reference to the embodiments disclosed herein can be implemented in electronic hardware, or a combination of computer software and electronic hardware. Whether these functions are executed in a mode of hardware or software depends on particular applications and design constraint conditions of technical solutions. Those skilled in the art can use different methods to implement the described functions for each particular application, but it is not to be considered that such implementation is beyond the scope of the present disclosure.

Those skilled in the art can clearly understand that for convenience and conciseness of description, for specific working processes of systems, apparatuses and units described above, refer to the corresponding processes in the foregoing method embodiments, and details are not described herein again.

In the several embodiments provided in the present disclosure, it is to be understood that the disclosed systems, apparatuses, and methods may be implemented in other manners. For example, the described apparatus embodiments are merely schematic. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be indirect couplings or communication connections through some interfaces, apparatuses or units, or may be electrical, mechanical, or in other forms.

The units described as separate components may be or may not be physically separated, and components displayed as units may be or may not be physical units, that is, may be located in one position, or may be distributed on multiple network units. Part or all of the units may be selected according to actual needs to achieve objectives of solutions of the embodiments.

In addition, functional units in the embodiments of the present disclosure may be integrated into one processing unit, or each of the units may be physically separated, or two or more units may be integrated into one unit.

When the functions are realized in a form of a software functional unit and sold or used as an independent product, the functions may be stored in a computer-readable storage medium. Based on such understanding, the technical solutions in the present disclosure essentially, or the part contributing to a related art, or part of the technical solutions may be implemented in a form of a software product. The computer software product is stored in a storage medium and includes several instructions for instructing a computer device (which may be a personal computer, a server, a network device, or the like) to perform all or part steps of the methods described in the embodiments of the present disclosure. The foregoing storage media include: various media that can store program code, such as a USB flash drive, a removable hard disk, a Read-Only Memory (ROM), a Random Access Memory (RAM), a magnetic disk, or an optical disc.

The steps of the methods in the embodiments of the present disclosure may be reordered, combined, or deleted according to actual needs.

Modules in the apparatuses in the embodiments of the present disclosure may be combined, divided, or deleted according to actual needs.

The above embodiments are merely used for describing the technical solutions of the present disclosure, but are not intended to limit the present disclosure. Although the present disclosure is described in detail with reference to the foregoing embodiments, those of ordinary skill in the art understand that: modifications may still be made to the technical solutions recorded in the various foregoing embodiments, or equivalent replacements may be made to part of technical features. These modifications or replacements will not cause the essence of corresponding technical solutions to depart from the scope of the technical solutions in the embodiments of the present disclosure.

## Claims

1. An electronic and electrical system for a vehicle, comprising a first device and a second device, the electronic and electrical system further comprising a first communication link and a second communication link in communication connection with the first device and the second device, the first device communicating with the second device through the first communication link and/or the second communication link.

2. The electronic and electrical system according to claim 1, wherein communication types of the first communication link and the second communication link are the same; or communication types of the first communication link and the second communication link are different.

3. The electronic and electrical system according to claim 1, wherein a communication type of the first communication link is one of Ethernet communication, CAN communication, optical fiber communication, WiFi communication, and Bluetooth communication; and/or
a communication type of the second communication link is one of Ethernet communication, CAN communication, optical fiber communication, WiFi communication, and Bluetooth communication.

4. The electronic and electrical system according to claim 1, wherein communication types of the first communication link and the second communication link are the same; the electronic and electrical system further comprises a third communication link in communication connection with the first device and the second device; a communication type of the third communication link is different from the communication type of the first communication link; and the third communication link is configured for the communication between the first device and the second device.

5. The electronic and electrical system according to claim 4, further comprising a fourth communication link in communication connection with the first device and the second device, a communication type of the fourth communication link being the same as the communication type of the third communication link, the fourth communication link being configured to realize the communication between the first device and the second device.

6. The electronic and electrical system according to claim 4, the communication type of the third communication link is one of Ethernet communication, CAN communication, optical fiber communication, WiFi communication, and Bluetooth communication.

7. The electronic and electrical system according to any one of claims 1 to 6, wherein when the first communication link is in a failure state, the first device communicates with the second device through the second communication link; and/or
when the first communication link is unable to meet a service requirement separately, the first device communicates with the second device through the first communication link and the second communication link.

8. The electronic and electrical system according to any one of claims 1 to 6, wherein the first device comprises at least one of a controller, a sensor, and an actuator, and/or, the second device comprises at least one of a controller, a sensor, and an actuator.

9. The electronic and electrical system according to any one of claims 1 to 6, wherein the first device is a domain controller, and/or the second device is a domain controller.

10. The electronic and electrical system according to any one of claims 1 to 6, wherein the first device is configured to realize a first function, and the second device is configured to realize the first function when the first device is in a first state.

11. The electronic and electrical system according to claim 10, wherein the first state comprises a failure state, or a state that the first device is unable to meet a service requirement separately.

12. The electronic and electrical system according to claim 10, wherein the first function comprises at least one of a power control function, a steering function, a braking function, a vehicle body control function, and a chassis control function.

13. The electronic and electrical system according to any one of claims 1 to 6, wherein the first device is a first domain controller of the vehicle, and the second device is a cross-domain computing controller of the vehicle.

14. The electronic and electrical system according to any one of claims 1 to 6, further comprising a third device, the third device being connected to the first communication link, and being located between the first device and the second device; and/or
further comprising a fourth device, the fourth device being connected to the second communication link, and being located between the first device and the second device,
preferably wherein the third device comprises at least one of a controller, a sensor, and an actuator, and/or the fourth device comprises at least one of a controller, a sensor, and an actuator;
or wherein the third device is a front area controller of the vehicle, and the fourth device is a rear area controller of the vehicle.

15. A vehicle, comprising the electronic and electrical system according to any one of claims 1 to 14.
